# EUROPÄISCHE PATENTSCHRIFT

(11) **EP 2 983 865 B1**
(45) Veröffentlichungstag und Bekanntmachung des Hinweises auf die Patenterteilung: **02.05.2018**
(21) Anmeldenummer: 14708290.3
(22) Anmeldetag: 07.03.2014
(51) Int. Cl.: F16B 33/06

(54) **VERBINDUNGSSYSTEM UND ZUGEHÖRIGES OBERFLÄCHENBEHANDLUNGSVERFAHREN**
CONNECTING SYSTEM AND PERTAINING SURFACE TREATMENT METHOD
SYSTÈME DE RACCORDEMENT ET PROCÉDÉ DE TRAITEMENT DE SURFACE ASSOCIÉ

(30) Priorität: 08.04.2013 DE 102013206149
(43) Veröffentlichungstag der Anmeldung: 17.02.2016
(73) Patentinhaber: NovoNox KG, 71706 Markgröningen (DE)
(72) Erfinder: LEUZE, Jürgen, 72172 Sulz a.N. (DE)
(74) Vertreter: Kohler Schmid Möbus Patentanwälte
(86) Internationale Anmeldenummer: PCT/EP2014/054438
(87) Internationale Veröffentlichungsnummer: WO 2014/166677

(56) Entgegenhaltungen:
- CN-U- 201 615 124
- US-A- 3 453 784
- US-A- 5 188 495
- US-A1- 2006 171 794

## Beschreibung

### Gebiet der Erfindung

Die vorliegende Erfindung betrifft ein Verbindungssystem mit einer Schraube und einer Mutter sowie ein zugehöriges Oberflächenbehandlungsverfahren für Metallteile.

### Hintergrund der Erfindung

In der Verbindungstechnik sind verschiedene mechanische Vorrichtungen zum Zusammensetzen technischer Gebilde, insbesondere von Maschinen, Anlagen, Apparaten und Geräten, aus deren Einzelteilen bekannt. Ein zur Herstellung fester, aber lösbarer Verbindungen gebräuchliches Element ist dabei eine Schraube, also ein mit einem Außengewinde versehener Stift oder Bolzen. Die Schraube kommt etwa dort zum Einsatz, wo zwei Werkstücke formschlüssig miteinander zu verbinden sind. Sofern die Schraube zur Zusammenwirkung mit einem Gegengewinde vorgesehen ist, bezeichnet man diese auch als Metallschraube. Eine solche Metallschraube ist typischerweise zylindrisch ausgeführt, wobei sich das Gegengewinde in einer Mutter oder einem anderen an der Verbindung beteiligten Gegenstück befinden kann. Stahl, Messing, Kupfer und Kunststoff sind gebräuchliche Werkstoffe zur Herstellung von Metallschrauben.

Zum formschlüssigen Kontakt mit Montagewerkzeugen zum Drehen der Schraube ist diese häufig mit einem Kopf versehen, dessen untere Ringfläche zugleich als Anschlag gegen das mit der Schraube zu befestigende Werkstück dienen kann. Die Anschlussgeometrie für das Montagewerkzeug basiert dabei etwa auf einem Schlitz, Außen- oder Innensechskant.

Die CN 201615124 U beschreibt einen Schraubbolzen, mit einem Sechskantkopf, an den ein Bund mit flacher Unterseite angrenzt, mit einem gewindelosen Schaftabschnitt, der sich an den Bund anschließt, und mit einem Gewindeabschnitt, der sich an den gewindelosen Schaftabschnitt anschließt. Die oberen und die unteren Stirnflächen sind poliert und weisen eine Rauigkeit von 0,01 µm auf.

### Zusammenfassung der Erfindung

Die vorliegende Erfindung wurde vor dem Hintergrund des vorstehend beschriebenen Stands der Technik gemacht, wobei es Aufgabe der vorliegenden Erfindung ist, ein verbessertes Verbindungssystem bereitzustellen, das hohen Hygieneanforderungen gerecht wird.

Diese Aufgabe wird durch ein Verbindungssystem mit den Merkmalen des Anspruchs 1 gelöst. Ein Vorzug dieser Lösung liegt in ihrer Eignung für Umgebungen, die besonderen Hygieneauflagen unterliegen, wie sie etwa für den Gesundheitsbereich in zahlreichen Staaten gesetzlich normiert sind. Insbesondere ist die Schraube in vorteilhafter Weise der Reinigung, Sterilisation oder Desinfektion zugänglich, sofern derartige Maßnahmen nicht durch die Ausgestaltung der Schraube insgesamt verzichtbar gemacht werden. Auch im wirtschaftlichen Bereich, etwa im Rahmen der Lebensmittel- oder Wäschereihygiene, bietet die Erfindung Vorzüge im Rahmen der sterilen Herstellung, Abfüllung und Verpackung. In der pharmazeutischen Industrie, Medizin und Zahntechnik erschließt ein derartiges Verbindungsmittel Anwendungsgebiete unter anderem im Bereich der Reinigungs-, Desinfektions- und Trocknungsautomaten, in erster Linie aber gleichfalls auf den oben genannten Stufen des Herstellungs- und Verpackungsprozesses. Verunreinigungen hochsensibilisierender Stoffe, biologischer Zubereitungen mit lebenden Organismen, bestimmter Hormone, Zytostatika und anderer hochwirksamer Medikamente werden durch ein erfindungsgemäßes Verbindungssystem in der Regel vermieden. Insbesondere bei der Herstellung von Produkten, die Mensch oder Tier infundiert oder injiziert, in großen Dosen oder über einen langen Zeitraum verabreicht werden, bietet die Erfindung somit einen entscheidenden Vorteil gegenüber herkömmlichen Verbindungssystemen.

Im naturwissenschaftlichen Umfeld, wo besonders in physikalischen oder biotechnologischen Laborumgebungen Verunreinigungen zu vermeiden sind, mag ein erfindungsgemäßes Verbindungssystem etwa bei Sicherheitswerkbänken, Autoklaven oder anderen Geräten Anwendung finden, die durch geeignete Pumpen und Filteranlagen steril gehalten werden müssen. Dies gilt in besonderem Maße für sogenannte Reinräume, die - zum Beispiel mittels spezieller Belüftungsanlagen - frei von Staub zu halten sind, so etwa zum Zwecke der Halbleiterfertigung.

Weitere vorteilhafte Ausgestaltungen der Erfindung sind in den Unteransprüchen angegeben.

Die Oberflächenrauhigkeit der Schraube, und dies in allen Einzelbereichen der Schraube, ist damit so gewählt, dass sich keine Ablagerung, wie Schmutz, auf der Außenoberfläche der Schraube absetzen kann, bzw. er ist einfach zu entfernen, weil der Schmutz auf der Außenoberfläche der Schraube nicht haften kann.

Wird die Schraube gemäß der Erfindung als Verbindungssystem mit der Mutter, einer Dichtungsscheibe oder einem an den Schraubenkopf angrenzenden Werkstück eingesetzt, so entsprechen die einem Fluid oder Feststoff ausgesetzten Oberflächen des Verbindungssystems der Oberflächengüte der Schraube. Jedwede Formenübergänge an der Schraube, der Mutter, vom Schraubenkopf zu einer Dichtungsscheibe oder Dichtung, vom Schraubenkopf zu einem Werkstück sind derart ausgestaltet, dass Fremdablagerungen an diesen Gegenständen ausgeschlossen werden können oder dass die kontaminierten Bereiche einfachst zu reinigen sind.

### Kurze Beschreibung der Zeichnung

Fig. 1 zeigt eine Schraube für ein erfindungsgemäßes Verbindungssystem in einer Draufsicht;
Fig. 2 zeigt die Schraube gemäß Fig. 1 in einer Seitenansicht;
Fig. 3 zeigt eine Mutter zur Verwendung mit einer Schraube in einem erfindungsgemäßen Verbindungssystem;
Fig. 4 zeigt einen Schnitt entlang der Linie A-A der Fig. 3;
Fig. 5 zeigt in einer schematischen, teilweise geschnittenen Darstellung ein erfindungsgemäßes Verbindungssystem sowie ein an einer Struktur zu befestigendes Bauteil, mit der Dichtung in entspanntem Zustand vor einem Festziehen der Schraube;
Fig. 6 zeigt das Verbindungssystem von Fig. 5, mit der Dichtung im verpressten Zustand nach einem Festziehen der Schraube;
Fig. 7 zeigt schematische Illustrationen zu einer erfindungsgemäßen Oberflächenbehandlung von Metallteilen, mit einem ersten Poliervorgang A), einem optionalen mittleren Poliervorgang B) und einem letzten Poliervorgang C).

### Detaillierte Beschreibung der Erfindung

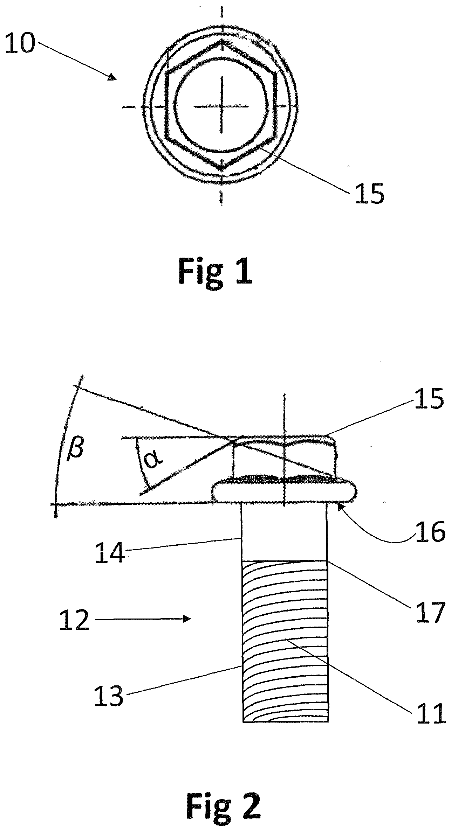

**Fig. 1** und **Fig. 2** zeigen eine Schraube 10 für ein erfindungsgemäßes Verbindungssystem. Diese ist als hochfeste Flanschkopfschraube nach DIN EN 1665 ausgestaltet und umfasst einen Kopf 15, der im Wesentlichen frei von Einsenkungen, Erhöhungen oder Beschriftungen ist. Die die Geometrie des Kopfes 15 definierenden, in Fig. 1 dargestellten Winkel sind dabei in den Bereichen 15°-25° für den Winkel *α* und 15°-30° für den Winkel *β* gewählt.

Ein ISO 724 oder ISO 965-2 entsprechendes, in der Seitenansicht der Fig. 2 erkennbares Gewinde 11 der Schraube 10 weist einen GewindeNenndurchmesser zwischen 5 und 22 mm, eine Gewindelänge zwischen 15 und 25 mm, eine normgemäße Gewindesteigung zwischen 0,8 und 2,5 mm sowie eine Mindestklemmlänge zwischen 9 und 19 mm auf. Gemäß einer bevorzugten Toleranzlage von g6 sind dabei nach ISO 965-1 in Abhängigkeit von Durchmesser und Steigung ein oberes Abmaß zwischen 24 µm und 65 µm, eine Außendurchmesser-Toleranz zwischen 150 µm und 280 µm sowie eine Flankendurchmesser-Toleranz zwischen 95 µm und 170 µm berücksichtigt.

Als Werkstoff kommt vorzugsweise rostfreier Stahl gemäß ISO 8992 der Festigkeitsklasse A4-70 zum Einsatz. Als geeigneter Stahlveredler gewährleistet Chrom in einer Konzentration von mindestens 10,5 % dabei eine erhöhte Härte und Korrosionsbeständigkeit. Die Zulegierung von Nickel als Austenitbildner erlaubt eine weitere Steigerung der Festigkeit der Schraube 10. Eine Veredelung durch Molybdän dient der zusätzlichen Verbesserung insbesondere ihrer Zugfestigkeit. Ein geeigneter hochlegierter Stahl wird gemäß DIN/EN etwa unter der Werkstoffnummer 1.4404 (X2CrNiMo17-12-2) geführt. Die aus einem derartigen Werkstoff hergestellte Schraube 10 erweist sich selbst in chlor- oder säurehaltigen Medien als hochgradig korrosionsbeständig.

Weitere mechanische Eigenschaften sind vorteilhaft gemäß der europäischen Norm prEN ISO 3506-1 unter Berücksichtigung der Grenzabmaße, Form- und Lagetoleranzen gemäß prEN ISO 4759-1, Produktklasse A ausgestaltet.

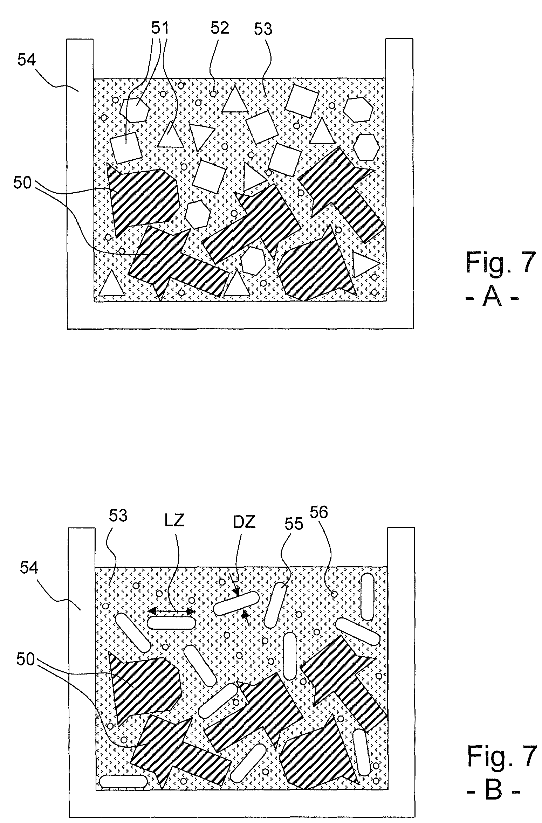

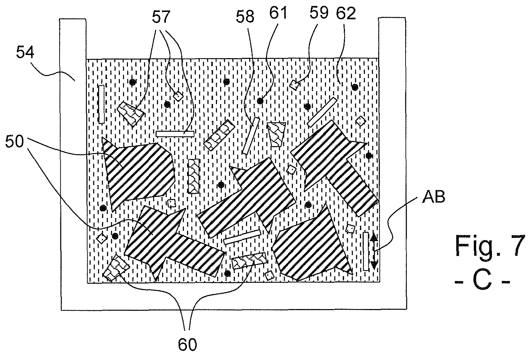

Um die Gefahr einer chemischen oder biologischen Verunreinigung zu verringern, weist die Schraube 10 verschiedene Merkmale auf, welche eine Anlagerung von Verschmutzungen verhindern können. Insbesondere ist die Schraube 10 mit einem Schaft 12 versehen, der sich in einen gewindebehafteten Schaftabschnitt 13 an einem dem Kopf 15 abgewandten Ende des Schafts 12 und einen gewindefreien Schaftabschnitt 14 an einem dem Kopf 15 zugewandten Ende des Schafts 12 unterteilt. Der Abstand des letzten vollen Gewindegangs von der Anlagefläche 16 des Kopfs 15 ist dabei derart bemessen, dass der gewindebehaftete Schaftabschnitt 13 im montierten Zustand der Schraube 10 eine ausreichende Mindestklemmlänge zu gewährleisten vermag. Der Gewindeauslauf 17 ist dabei vorzugsweise gemäß DIN 76-1 gestaltet. Um eine nachhaltige Kontamination auch entlang der Formübergänge der Schraube 10 weitestgehend auszuschließen, sind diese im Wesentlichen ohne Absätze, Spalt- oder Toträume ausgestaltet. Ebenso wenig ist ein Gewindefreistich vorgesehen. Auch an die Oberflächengüte der Schraube 10 sind besondere Anforderungen gestellt. So ist deren Mittenrauwert *R*ₐ, also das arithmetische Mittel der Abweichungen von einer Mittellinie der Oberfläche, das nach dem Drehen näherungsweise 0,8 µm betragen mag, auf ein Minimum reduziert. Vorzugsweise wurde die Oberfläche hierzu einem glättenden Feinbearbeitungsverfahren unterzogen, etwa einer Politur oder Presspolitur, auch bekannt als Burnishing. Etwaige Rauhigkeitsspitzen der Oberflächenstruktur einer derart behandelten Schraube 10 sind somit durch plastische und teilplastische Verformung weitestgehend geebnet. Gleichermaßen sind Ziehriefen, Eindrücke und andere Vertiefungen verfüllt. Im Ergebnis weist der Mittenrauwert *R*ₐ der Oberfläche einen Wert von ≤ 0,04 µm auf. Je nach dem angestrebten Einsatzbereich der Schraube 10 lässt sich durch aufwändigere Feinbearbeitungsverfahren wie Schleifen, Honen oder Läppen der Mittenrauwert *R*ₐ auf Werte von bis zu 0,05 µm, bei Anwendung besonderer Sorgfalt sogar bis zu 0,006 µm reduzieren. Ein in der Praxis bewährtes Verfahren geeignet zur Oberflächenbehandlung einer Schraube 10 für die Erfindung ist weiterhin in Fig. 7 erläutert.

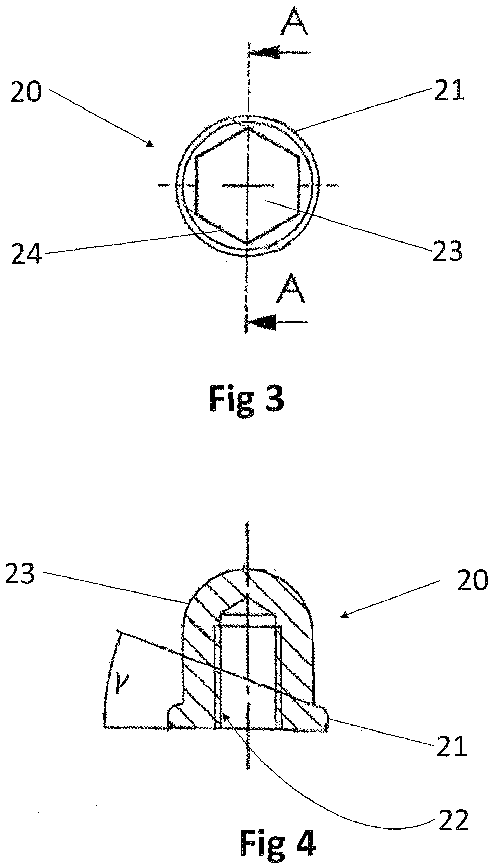

**Fig. 3** und **Fig. 4** zeigen eine Mutter 20 zur Verwendung mit der Schraube 10 in einem erfindungsgemäßen Verbindungssystem. Die Mutter 20 ist als Hutmutter nach DIN EN 1665 ausgestaltet und als solche mit einem Flansch 21, einem in Fig. 4 angedeuteten, als Sacklochgewinde endenden Innengewinde 22 und einem die Mutter 20 einseitig abschließenden, vollständig abgerundeten Hut 23 versehen. Insbesondere Durchmesser und Steigung des Innengewindes 22 sind so dimensioniert, dass der gewindebehaftete Schaftabschnitt 13 der Schraube 10 und das Innengewinde 22 der Mutter 20 eine Schraubverbindung eingehen können.

Die Länge des Innengewindes 22 ist dabei derart gewählt, dass in der vollständig eingeschraubten Endposition der Schraube 10 deren gewindebehafteter Schaftabschnitt 13 vollständig von dem durch das Innengewinde 22 der Mutter 20 gebildeten Sackloch aufgenommen wird. Ein die montierte Schraube 10 umspülendes Fluid gelangt auf diese Weise nicht mit dem gewindebehafteten Schaftabschnitt 13, sondern allenfalls mit dem gewindefreien Schaftabschnitt 14 in Kontakt. Ferner vermag in dieser Endposition der Hut 23 der Mutter 20 das darin eingedrehte Ende der Schraube 10 vor Oberflächenoxidation und Schmutz zu schützen und durch seine abgerundete Form zugleich die sonst durch das Schraubenende verursachte Verletzungsgefahr zu mindern.

Eine prismatische Außenkontur 24 des Huts 23 dient zur Verbindung mit einem Schraubenschlüssel, mit dem ein Drehmoment zum Anziehen der Mutter 20 an die Schraube 10 oder zum Lösen der Mutter 20 von der Schraube 10 eingeleitet werden kann. Der die Abflachung des Flansches 21 definierende, in Fig. 4 dargestellte Winkel *γ* ist dabei im Bereich 15°-25° gewählt.

Zur Erzielung der zuvor beschriebenen erfindungsgemäßen Wirkung weisen auch Material, Formübergänge und Oberfläche der Mutter 20 die bezüglich der Schraube 10 dargestellten Eigenschaften auf.

Um ungewollte Stoffübergänge durch eine mit der Schraube 10 versehene Bohrung zu verhindern, kann eine geeignete statische Dichtung, bevorzugt in der Form einer Scheibe, auf den Schaft 12 der Schraube 10 aufgesteckt werden. Diese hat typischerweise die Gestalt einer Gummi-Metall-Dichtung (GM-Dichtung), auch bekannt als "bonded seal", und setzt sich aus einer Metallscheibe mit einem umlaufenden, vorzugsweise vulkanisierten Elastomer-Dichtkörper zusammen. Dieser ist derart beschaffen, dass beim Verschrauben der Schraube 10 mittels der Mutter 20 die axial verlaufende Dichtlippe einerseits an die plane Anlagefläche 16 der Schraube 10 und andererseits an das durch die Schraube 10 zu fixierende Bauteil angepresst wird. Entsprechendes gilt, wenn die Dichtung zwischen dem Bauteil und der Mutter platziert wird, sodass der Elastomerkörper das Innengewinde 22 der Mutter 20 sowohl gegen die Mutter 20 als auch gegen das zu fixierende Bauteil abzudichten vermag. In beiden Anwendungsfällen begrenzt die Dicke der Metallscheibe beim Anziehen der Schraube 10 die Verpressung der auf der Metallscheibe ausgebildeten Dichtlippe.

Beim Einsatz der Schraube 10, der Mutter 20 oder der Dichtscheibe etwa im Rahmen eines Leitungssystems für fluide Medien wird ein Zurückbleiben oder Vermischen von Altprodukten mittels der beschriebenen Merkmale vermieden. Auf diese Weise wird sichergestellt, dass das mit einem der Bauteile in Verbindung kommende Medium durch den Kontakt keine nennenswerte Qualitätsveränderung erleidet, sei diese reaktiv, absorptiv oder additiv bedingt. Insbesondere wird eine mikrobielle oder anderweitige Verunreinigung des Mediums verhindert. Auch Rückstände, die zu einer unbeabsichtigten Kreuzkontamination oder Untermischung des Mediums mit einem anderen Material oder Produkt führen könnten, können sich im Durchflussbereich unter gewöhnlichen Umständen nicht anlagern.

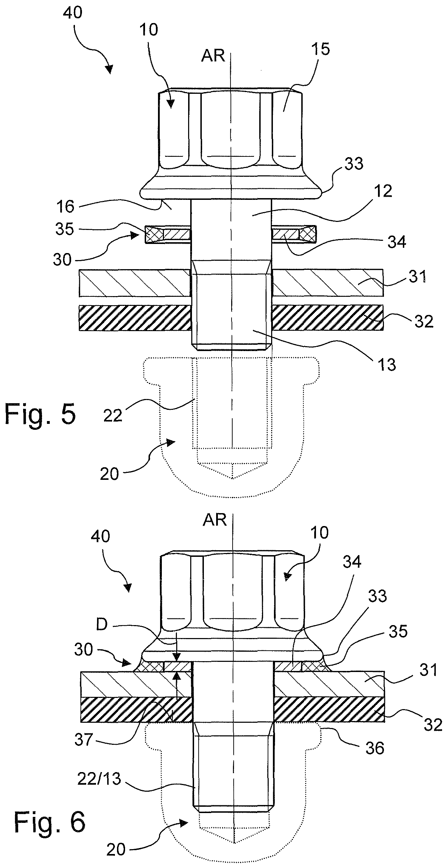

Die **Fig. 5** zeigt ein erfindungsgemäßes Verbindungssystem 40, umfassend eine Schraube 10, eine Dichtung 30, und eine Mutter 20; die Mutter 20 ist zur Besseren Unterscheidung von der Schraube 10 gepunktet dargestellt. Mit dem Verbindungssystem 40 soll beispielhaft ein Bauteil 31 an einer Struktur 32 befestigt werden. Zwischen einem Schraubenbund 33 am Schraubenkopf 15 und der Oberfläche des Bauteils 31 soll nach einer Montage kein Schmutz, insbesondere auch keine Flüssigkeit, eindringen können. Zur Abdichtung wird die Dichtung 30 eingesetzt. Diese umfasst eine Metallscheibe 34 und einen umlaufenden Dichtkörper 35 aus Elastomer-Material. Im entspannten Zustand des Dichtkörpers 35 ist dieser im Querschnitt im Wesentlichen trapezförmig aufgebaut; seine axiale Dicke (vgl. axiale Richtung AR) nimmt radial nach außen hin zu. Am radial äußersten Ende überragt der Dichtkörper 35 die Metallscheibe 34 beidseits in axialer Richtung. Der Schraubenbund 33 ist zur Anlagefläche 16 hin abgerundet ausgebildet.

Der Schaft 12 der Schraube 10 wird durch eine radiale Bohrung der Dichtung 30 und Bohrungen im Bauteil 31 und in der Struktur 32 gesteckt. Der gewindebehaftete Schaftabschnitt 13 der Schraube 10 wird in das Innengewinde 22 der Mutter 20 eingeschraubt und festgezogen.

Nach dem Festziehen, vgl. **Fig. 6****,** ist das Bauteil 31 an der Struktur 32 fixiert. Die axiale Dicke D der Metallscheibe 34 begrenzt dabei die Verformung des Dichtkörpers 35. Durch die Verformung wurden Teile des Dichtkörpers 35 radial nach außen gepresst. Der ursprünglich im Querschnitt trapezförmige Dichtkörper 35 legt sich nun nach oben hin stufenlos an den abgerundeten Schraubenbund 33 an. Der Dichtkörper 33 konnte dabei an der glatten Anlagefläche 16 des Schraubenkopfes 15 abgleiten. Nach unten hin verbreitert sich der Dichtkörper 35 radial stetig bis zum Bauteil 31, so dass hier keinerlei Totraum oder Spalt gebildet wird.

Das Innengewinde 22 der Mutter 20 ist in axialer Richtung AR ausreichend lang, um den gewindebehafteten Schaftabschnitt 13 vollständig aufzunehmen.

Man beachte, dass auch zwischen Struktur 32 und Mutter 20 eine dargestellte Dichtung 30 eingesetzt werden kann, falls gewünscht (nicht dargestellt); die Mutter 20 ist zu diesem Zweck an ihrer vorderen, seitlichen Kante 36 zu der der Struktur 32 zugewandten, ebenen Grundfläche 37 hin abgerundet.

**Fig. 7** illustriert schematisch ein Verfahren gemäß der Erfindung zur Oberflächenbehandlung von Metallteilen, insbesondere Schrauben 10 und Muttern 20 für ein vorstehend erläutertes Verbindungssystem 40. Mit der erfindungsgemäßen Oberflächenbehandlung können Metallteile 50 mit einem Mittenrauwert ihrer Oberfläche von 0,04 µm oder weniger zur Verfügung gestellt werden. Das Verfahren beruht auf einem mehrstufigen, mechanischen Polieren.

In einem ersten Poliervorgang, illustriert in **Teilbild A,** werden die Metallteile 50, hier Schrauben und Muttern, zusammen mit polygonen Schleifkörpern 51, insbesondere tetraedrischen, hexaedrischen (würfelförmigen) und/oder oktaedrischen Schleifkörpern, die bevorzugt aus Korund gefertigt sind, weiterhin mit Polierpaste enthaltend Schleifpartikel 52, bevorzugt aus SiC, und mit Petroleum 53, bevorzugt ein schwerflüchtiges und schwer entzündliches Petroleum, in einen Behälter 54 gegeben und durchmischt. Es hat sich bewährt, als Behälter 54 einen Schwingförderer zu wählen, und die Durchmischung durch Rütteln bzw. Schwingen des Behälters 54 einzurichten; allerdings kann alternativ auch der Behälter 54 getaumelt oder gedreht werden, oder der Inhalt gerührt werden. Das Durchmischen wird für wenigstens acht Stunden durchgeführt. Während des Durchmischens wird im Behälter 54 die Konzentration der Schleifpartikel 52 der Polierpaste kontrolliert und mehrfach korrigiert (d.h. Polierpaste wird in geeigneter Menge nachgefüllt). In Gewinden der Metallteile 50 setzen sich vor allem zu Beginn des ersten Poliervorgangs große Mengen Schleifpartikel 52 ab, die im Petroleum 53 ersetzt werden sollten, um eine gute Polierwirkung zu behalten. Bezüglich der polygonen Schleifkörper 51 hat es sich bewährt, die Linienradien, d.h. die Krümmungsradien an den Kanten, die zwei benachbarte Ecken am Schleifkörper 51 verbinden, zu 1 mm bis 6 mm zu wählen; damit können Schrauben und Muttern für Hygienezwecke besonders effizient bearbeitet werden. Man beachte, dass insbesondere das optimale Verhältnis von Metallteilen 50, Schleifkörpern 51, Polierpaste und Petroleum 53, weiterhin die optimale Größe der polygonen Schleifkörper 51 oder auch der Schleifpartikel 52 in der Polierpaste sowie die optimale Dauer des ersten Poliervorgangs je nach Typ der Metallteile 50 variieren (was entsprechend auch für die nachfolgenden Poliervorgänge gilt). Anschließend werden die Metallteile 50 gewaschen (nicht näher dargestellt).

Um besonders hohe Oberflächenqualitäten zu erreichen oder für die Oberflächenbehandlung besonders schwieriger Metallteile kann nun ein mittlerer Poliervorgang, vgl. **Teilbild B,** durchgeführt werden. Im Behälter 54 werden nun den Metallteilen 50 im Wesentlichen zylinderförmige Schleifkörper 55, bevorzugt mit halbkugelförmig abgerundeten Enden, zugesetzt. Typischerweise sind die Schleifkörper 55 aus sehr feinkörnigem, fast glasartigem Korund, mit einem Durchmesser DZ von 3 mm bis 6 mm und einer Länge LZ von 8 mm bis 12 mm, besonders bevorzugt 10 mm. Eine Polierpaste mit Schleifpartikeln 56 mit einer feineren Körnung als im ersten Poliervorgang und Petroleum 53 werden ebenfalls zugesetzt. Die Metallteile 50, die zylindrischen Schleifkörper 55, die Polierpaste und das Petroleum 53 werden wiederum für mindestens acht Stunden durchmischt, etwa durch Rütteln des Behälters 54. Die Konzentration der Schleifpartikel 55 der Polierpaste im Petroleum 53 wird kontrolliert und regelmäßig nachgefüllt. Anschließend werden die Metallteile 50 wiederum gewaschen (nicht näher dargestellt).

Es schließt sich ein letzter Poliervorgang an, illustriert im **Teilbild C.** In den Behälter 54 werden wiederum die Metallteile 50 eingefüllt, und weiterhin eine Mischung organischer Trägermaterialien 57 aus Feststoffteilchen unterschiedlicher Härte. Bevorzugt umfasst die Mischung von organischem Trägermaterial 57 Getreidedreschabfälle 58, Maisstärke-Partikel 59 und Holzpartikel 60. Die maximale Teilchenabmessung AB in der Mischung des organischen Trägermaterials 57 (größte Länge des jeweiligen Feststoffteilchens) sollte maximal 3 mm betragen. Weiterhin wird ein feines Graphitpulver 61 sowie ein Mineralöl 62 (etwa ein Siliconöl) zugesetzt. Der Inhalt des Behälters 54 wird für wenigstens zwei Stunden durchmischt, etwa durch Rütteln des Behälters 54. Anschließend werden die Metallteile 50 erneut gewaschen (nicht näher dargestellt).

Die Metallteile 50 besitzen schließlich eine polierte äußere Oberfläche mit einem Mittenrauwert von 0,04 µm oder besser. Die solchermaßen behandelten Metallteile 50 dieser Oberflächengüte können in hygienisch überwachten Anwendungsbereichen eingesetzt werden.

Die vorliegende Erfindung betrifft ein Verbindungssystem 40 mit einer Schraube 10 und einer Mutter 20, wobei die Schraube 10 ausgebildet ist mit einem Schaft 12, der einen gewindebehafteten Schaftabschnitt 13 und einen gewindefreien Schaftabschnitt 14 aufweist, und einem Kopf 15, der eine im Wesentlichen plane Anlagefläche 16 zum Anlegen an ein Bauteil aufweist, wobei der Mittenrauwert einer Oberfläche der Schraube einen Wert von höchstens 0,04 µm aufweist. Die vorliegende Erfindung betrifft ferner ein Verfahren zur Oberflächenbehandlung geeignet für eine solche Schraube 10.

## Patentansprüche

1. Verbindungssystem (40), umfassend
- eine Schraube (10) mit einem Schaft (12), der einen gewindebehafteten Schaftabschnitt (13) und einen gewindefreien Schaftabschnitt (14) aufweist, und einem Kopf (15), der eine im Wesentlichen plane Anlagefläche (16) zum Anlegen an ein Bauteil (31) aufweist, wobei der Mittenrauwert einer Oberfläche der Schraube (10) einen Wert von ≤ 0,04 µm aufweist, und
- eine Mutter (20) mit einem Innengewinde (22), derart angeordnet, dass der gewindebehaftete Schaftabschnitt (13) und das Innengewinde (22) eine Schraubverbindung eingehen können,
wobei der gewindebehaftete Schaftabschnitt (13) und das Innengewinde (22) derart dimensioniert sind, dass der gewindebehaftete Schaftabschnitt (13) in einer vollständig eingeschraubten Endposition der Schraube (10) vollständig vom Innengewinde (22) umgeben ist.

2. Verbindungssystem (40) nach Anspruch 1, wobei die Oberfläche poliert ist.

3. Verbindungssystem (40) nach Anspruch 1 oder 2, wobei der Kopf (15) im Wesentlichen frei von Einsenkungen, Erhöhungen, Stufen, Vor- und/oder Rücksprüngen und/oder Beschriftungen ist.

4. Verbindungssystem (40) nach einem der vorhergehenden Ansprüche, wobei der Kopf (15) ein Flanschkopf ist, dessen dem Schaft (12) zugewandte Seite die Anlagefläche (16) bildet.

5. Verbindungssystem (40) nach einem der vorhergehenden Ansprüche, wobei die Schraube (10) aus hochfestem rostfreiem Edelstahl ist.

6. Verbindungssystem (40) nach einem der vorhergehenden Ansprüche, wobei die Mutter (20) einen Flansch (21) aufweist.

7. Verbindungssystem (40) nach einem der vorhergehenden Ansprüche, wobei die Mutter (20) einen die Mutter (20) einseitig abschließenden Hut (23) aufweist, sodass das Innengewinde (22) ein Sacklochgewinde ist.

8. Verbindungssystem (40) nach einem der vorhergehenden Ansprüche, ferner umfassend eine im Wesentlichen scheibenförmige Dichtung (30) zum Abdichten der Schraube (10) gegen ein zu fixierendes Bauteil (31), wobei die Dichtung (30) eine radiale Bohrung aufweist, derart angeordnet, dass die Dichtung (30) auf den Schaft (12) aufgesteckt werden kann.

9. Verbindungssystem (40) nach einem der vorhergehenden Ansprüche, weiterhin umfassend eine im Wesentlichen scheibenförmige Dichtung (30) zum Abdichten der Schraube (10) gegen ein zu fixierendes Bauteil (31), wobei die Dichtung (30) eine radiale Bohrung aufweist, derart angeordnet, dass die Dichtung (30) auf den Schaft (12) aufgesteckt werden kann,
wobei die Dichtung (30) sich aus einer Metallscheibe (34) mit einem umlaufenden Elastomer-Dichtkörper (35) zusammensetzt, derart, dass die Dicke (D) der Metallscheibe (34) beim Anziehen der Schraube (11) die Verpressung des auf der Metallscheibe (34) ausgebildeten Elastomer-Dichtkörpers (35) begrenzt,
und wobei der Kopf (15) der Schraube (10) einen Schraubenbund (33) aufweist, der zur Anlagefläche (16) hin abgerundet ist.

10. Verbindungssystem (40) nach Anspruch 9, **dadurch gekennzeichnet, dass** der Dichtkörper (35) im entspannten Zustand einen im Wesentlichen trapezförmigen Querschnitt aufweist, wobei sich der Dichtkörper (35) radial nach außen hin in axialer Richtung (A) verbreitert.

11. Verbindungssystem (40) nach Anspruch 9 oder 10, **dadurch gekennzeichnet, dass** sich der Dichtkörper (35) im verpressten Zustand stufenlos an den abgerundeten Schraubenbund (33) anlegt und axial vom Schraubenbund (33) weg in radialer Richtung verbreitert.

12. Verfahren zur Oberflächenbehandlung von Metallteilen (50), insbesondere zur Herstellung von Schrauben (10) und/oder Muttern (20) für ein Verbindungssystem (40) nach einem der vorhergehenden Ansprüche,
wobei die Oberfläche der Metallteile (50) mit folgenden Schritten bearbeitet wird:
a) Die Metallteile (50) werden einem ersten Poliervorgang unterzogen, wobei die Metallteile (50), polygone Schleifkörper (51), insbesondere mit Linienradien zwischen 1 mm und 6 mm, Polierpaste und Petroleum (53) in einen Behälter (54), insbesondere einen Schwingförderer, eingefüllt sind und wenigstens 8 Stunden, insbesondere wenigstens 12 Stunden, durchmischt werden, wobei während des Durchmischens Polierpaste wiederholt nachgefüllt wird;
b) Die Metallteile (50) werden gewaschen;
c) Die Metallteile (50) werden einem letzten Poliervorgang unterzogen, wobei die Metallteile (50), eine Mischung organischer Trägermaterialien (57) unterschiedlicher Härte, ein mineralisches Öl (62) und Graphitpulver (61) in einen Behälter (54), insbesondere einen Schwingförderer, eingefüllt sind und wenigstens 2 Stunden, insbesondere wenigstens 3 Stunden, durchmischt werden;
d) Die Metallteile (50) werden gewaschen.

13. Verfahren nach Anspruch 12, **dadurch gekennzeichnet, dass** in Schritt c) die organischen Trägermaterialien (57) Getreidedreschabfälle (58), Maisstärke (59) und Holzpartikel (60) umfassen, insbesondere mit Teileabmessungen (AB) in den organischen Trägermaterialien (57) von maximal 3 mm.

14. Verfahren nach Anspruch 12 oder 13, **dadurch gekennzeichnet, dass** zwischen den Schritten b) und c) weiterhin folgende Schritte stattfinden:
b') Die Metallteile (50) werden einem mittleren Poliervorgang unterzogen, wobei die Metallteile (50), zylindrische Schleifkörper (55), insbesondere mit einem Durchmesser (DZ) zwischen 3 mm und 6 mm und einer Länge (LZ) zwischen 8 mm und 12 mm, Polierpaste mit einer feineren Körnung als in Schritt a) und Petroleum (53) in einen Behälter (54), insbesondere einen Schwingförderer, eingefüllt sind und wenigstens 8 Stunden, insbesondere wenigstens 12 Stunden, durchmischt werden, wobei während des Durchmischens Polierpaste wiederholt nachgefüllt wird;
b") Die Metallteile (50) werden gewaschen.

15. Verwendung eines Verbindungssystems (40) nach einem der Ansprüche 1 bis 11 in einer Umgebung, die Hygieneauflagen unterliegt, insbesondere in der Lebensmitteltechnik, der pharmazeutischen Industrie oder der Medizintechnik.

## Claims

1. Connection system (40), comprising
- a screw (10) having a shaft (12) which has a threaded shaft portion (13) and a thread-free shaft portion (14), and having a head (15) which has a substantially planar abutment face (16) for placing against a component (31), wherein the mean roughness value of a surface of the screw (10) has a value of ≤ 0.04 µm, and
- a nut (20) having an inner thread (22), arranged in such a manner that the threaded shaft portion (13) and the inner thread (22) can form a screw connection,
wherein the threaded shaft portion (13) and the inner thread (22) are sized in such a manner that the threaded shaft portion (13) in a completely screwed-in end position of the screw (10) is completely surrounded by the inner thread (22).

2. Connection system (40) according to claim 1, wherein the surface is polished.

3. Connection system (40) according to claim 1 or 2, wherein the head (15) is substantially free from indentations, protuberances, steps, projections and/or recesses and/or indicia.

4. Connection system (40) according to any one of the preceding claims, wherein the head (15) is a flange head whose side facing the shaft (12) forms the abutment face (16).

5. Connection system (40) according to any one of the preceding claims, wherein the screw (10) is of high-tensile stainless high-grade steel.

6. Connection system (40) according to any one of the preceding claims, wherein the nut (20) has a flange (21).

7. Connection system (40) according to any one of the preceding claims, wherein the nut (20) has a cap (23) which terminates the nut (20) at one side so that the inner thread (22) is a blind-hole thread.

8. Connection system (40) according to any one of the preceding claims, further comprising a substantially disclike seal (30) for sealing the screw (10) with respect to a component (31) which is intended to be fixed, wherein the seal (30) has a radial hole, arranged in such a manner that the seal (30) can be placed on the shaft (12).

9. Connection system (40) according to any one of the preceding claims, further comprising a substantially disclike seal (30) for sealing the screw (10) with respect to a component (31) which is intended to be fixed, wherein the seal (30) has a radial hole, arranged in such a manner that the seal (30) can be placed on the shaft (12),
wherein the seal (30) is composed of a metal disc (34) having a peripheral elastomer sealing member (35) in such a manner that the thickness (D) of the metal disc (34) when the screw (11) is tightened limits the compression of the elastomer sealing member (35) which is formed on the metal disc (34), and wherein the head (15) of the screw (10) has a screw collar (33) which is rounded in the direction towards the abutment face (16).

10. Connection system (40) according to claim 9, **characterised in that** the sealing member (35) in the relaxed state has a substantially trapezoidal cross-section, wherein the sealing member (35) expands radially outwards in an axial direction (A).

11. Connection system (40) according to claim 9 or 10, **characterised in that** the sealing member (35) in the compressed state abuts in a stepless manner against the rounded screw collar (33) and expands axially away from the screw collar (33) in a radial direction.

12. Method for surface treatment of metal components (50), in particular for producing screws (10) and/or nuts (20) for a connection system (4) according to any one of the preceding claims,
wherein the surface of the metal components (50) is processed with the following steps:
a) the metal components (50) are subjected to a first polishing operation, wherein the metal components (50), polygonal grinding members (51), in particular having line radii between 1 mm and 6 mm, polishing paste and petroleum (53) are poured into a container (54), in particular a vibrator conveyor, and are mixed for at least 8 hours, in particular at least 12 hours, wherein during the mixing operation polishing paste is repeatedly re-introduced;
b) the metal components (50) are washed;
c) the metal components (50) are subjected to a last polishing operation, wherein the metal components (50), an admixture of organic carrier materials (57) of differing hardnesses, a mineral oil (62) and graphite powder (61) are poured into a container (54), in particular a vibrator conveyor, and mixed for at least 2 hours, in particular at least 3 hours;
d) the metal components (50) are washed.

13. Method according to claim 12, **characterised in that** in step c) the organic carrier materials (57) comprise grain threshing waste (58), maize starch (59) and wood particles (60), in particular having particle dimensions (AB) in the organic carrier materials (57) of a maximum of 3 mm.

14. Method according to claim 12 or 13, **characterised in that** between the steps b) and c) the following steps are further carried out:
b') the metal components (50) are subjected to a middle polishing operation, wherein the metal components (50), cylindrical grinding members (55), in particular having a diameter (DZ) between 3 mm and 6 mm and a length (LZ) between 8 mm and 12 mm, polishing paste having a finer grain size than in step a) and petroleum (53) are poured into a container (54), in particular a vibrator conveyor, and mixed for at least 8 hours, in particular at least 12 hours, wherein during the mixing operation polishing paste is repeatedly re-introduced;
b") the metal components (50) are washed.

15. Use of a connection system (40) according to any one of claims 1 to 11 in an environment which is subjected to hygiene requirements, in particular in food technology, the pharmaceutical industry or medical technology.

## Revendications

1. Système de liaison (40) comprenant
- une vis (10) dotée d'une tige (12) munie d'une région filetée (13) et d'une région (14) dépourvue de filetage, et une tête (15) comportant une surface de contact (16) substantiellement plane, conçue pour venir en applique contre un élément structurel (31), la rugosité moyenne d'une surface de ladite vis (10) présentant une valeur ≤ 0,04 µm, et
- un écrou (20) pourvu d'un filetage intérieur (22), disposé de façon telle que la région filetée (13) de la tige et ledit filetage intérieur (22) puissent instaurer une liaison par vissage,
la région filetée (13) de la tige, et le filetage intérieur (22), étant dimensionnés de telle sorte que ladite région filetée (13) de la tige soit entourée en totalité par ledit filetage intérieur (22) en un emplacement extrême de vissage intégral de ladite vis (10).

2. Système de liaison (40) selon la revendication 1, dans lequel la surface est polie.

3. Système de liaison (40) selon la revendication 1 ou 2, dans lequel la tête (15) est pour l'essentiel exempte de creusures, de protubérances, de gradins, de zones en saillie et/ou en retrait, et/ou d'inscriptions.

4. Système de liaison (40) selon l'une des revendications précédentes, dans lequel la tête (15) est une tête à collerette, dont le côté tourné vers la tige (12) forme la surface de contact (16).

5. Système de liaison (40) selon l'une des revendications précédentes, dans lequel la vis (10) consiste en de l'acier inoxydable à haute résistance.

6. Système de liaison (40) selon l'une des revendications précédentes, dans lequel l'écrou (20) est muni d'un collet (21).

7. Système de liaison (40) selon l'une des revendications précédentes, dans lequel l'écrou (20) est doté d'un capuchon (23) marquant l'achèvement unilatéral dudit écrou (20), de sorte que le filetage intérieur (22) est un filetage borgne.

8. Système de liaison (40) selon l'une des revendications précédentes, comprenant, en outre, une garniture d'étanchement (30) substantiellement discoïdale, conçue pour assurer l'étanchéité de la vis (10) contre un élément structurel (31) à assujettir, la garniture d'étanchement (30) comportant un perçage radial disposé de façon telle que ladite garniture d'étanchement (30) puisse être emboîtée sur la tige (12).

9. Système de liaison (40) selon l'une des revendications précédentes, comprenant, par ailleurs, une garniture d'étanchement (30) substantiellement discoïdale, réalisée pour assurer l'étanchéité de la vis (10) contre un élément structurel (31) à assujettir, la garniture d'étanchement (30) comportant un perçage radial disposé de façon telle que ladite garniture d'étanchement (30) puisse être emboîtée sur la tige (12),
ladite garniture d'étanchement (30) étant composée d'un disque métallique (34) associé à un corps périphérique d'étanchement (35) en élastomère, de telle sorte que l'épaisseur (D) dudit disque métallique (34) limite, lors du blocage de la vis (10), la compression dudit corps d'étanchement (35) en élastomère implanté sur ledit disque métallique (34),
et la tête (15) de ladite vis (10) comportant un collet de vissage (33) arrondi en direction de la surface de contact (16).

10. Système de liaison (40) selon la revendication 9, **caractérisé par le fait que** le corps d'étanchement (35) présente une section transversale substantiellement trapézoïdale, à l'état détendu, sachant que ledit corps d'étanchement (35) s'élargit radialement vers l'extérieur dans le sens axial (A).

11. Système de liaison (40) selon la revendication 9 ou 10, **caractérisé par le fait que** le corps d'étanchement (35) vient en applique sans discontinuité contre le collet arrondi de vissage (33), à l'état comprimé, et s'élargit axialement en s'éloignant dudit collet de vissage (33) dans le sens radial.

12. Procédé dévolu au traitement de surfaces de pièces métalliques (50), notamment en vue de la fabrication de vis (10) et/ou d'écrous (20) destiné(e)s à un système de liaison (40) conforme à l'une des revendications précédentes,
la surface desdites pièces métalliques (50) étant usinée à l'aide des étapes suivantes :
a) les pièces métalliques (50) sont soumises à une première opération de polissage, lesdites pièces métalliques (50), des corps abrasifs polygonaux (51) présentant notamment des rayons de transition compris entre 1 mm et 6 mm, de la pâte à polir et du pétrole (53), étant alors déversés dans un récipient (54), notamment un convoyeur vibrant, puis brassés pendant au moins 8 heures, au moins 12 heures en particulier, de la pâte à polir étant répétitivement ajoutée au cours du brassage ;
b) lesdites pièces métalliques (50) sont lavées ;
c) les pièces métalliques (50) sont soumises à une dernière opération de polissage, lesdites pièces métalliques (50), un mélange de matériaux substrats organiques (57) de duretés différentes, une huile minérale (62) et de la poudre de graphite (61), étant alors déversés dans un récipient (54), notamment un convoyeur vibrant, puis brassés pendant au moins 2 heures, au moins 3 heures en particulier ;
d) lesdites pièces métalliques (50) sont lavées.

13. Procédé selon la revendication 12, **caractérisé par le fait qu'**à l'étape c), les matériaux substrats organiques (57) incluent des débris (58) de battage de céréales, de l'amidon de maïs (59) et des particules de bois (60), notamment avec des dimensions de particules (AB) de 3 mm au maximum dans lesdits matériaux substrats organiques (57).

14. Procédé selon la revendication 12 ou 13, **caractérisé par le fait que** les étapes suivantes ont lieu, par ailleurs, entre les étapes b) et c) :
b') les pièces métalliques (50) sont soumises à une opération de polissage intermédiaire, lesdites pièces métalliques (50), des corps abrasifs cylindriques (55) notamment munis d'un diamètre (DZ) compris entre 3 mm et 6 mm et d'une longueur (LZ) comprise entre 8 mm et 12 mm, de la pâte à polir présentant une granulométrie plus fine qu'à l'étape a), et du pétrole (53), étant alors déversés dans un récipient (54), notamment un convoyeur vibrant, puis brassés pendant au moins 8 heures, au moins 12 heures en particulier, de la pâte à polir étant répétitivement ajoutée au cours du brassage ou de l'opération de mélange ;
b") lesdites pièces métalliques (50) sont lavées.

15. Utilisation d'un système de liaison (40) conforme à l'une des revendications 1 à 11, dans un environnement soumis à des obligations d'hygiène, en particulier dans les techniques de l'industrie alimentaire, dans l'industrie pharmaceutique ou dans les techniques médicales.
